# FASCICULE DE BREVET EUROPEEN

(11) **EP 2 880 379 B1**
(45) Date de publication et mention de la délivrance du brevet: **04.09.2019**
(21) Numéro de dépôt: 13744750.4
(22) Date de dépôt: 16.07.2013
(51) Int. Cl.: F25B 30/02, F25B 27/02

(54) **INSTALLATION COMPRENANT UNE POMPE À CHALEUR POUR RÉALISER UN CHAUFFAGE À FORT ÉCART DE TEMPÉRATURES D'UN FLUIDE EXTÉRIEUR**
VORRICHTUNG MIT EINER WÄRMEPUMPE ZUM ERHITZEN EINES EXTERNEN FLUIDS MIT EINEM GROSSEN TEMPERATURGRADIENTEN
EQUIPMENT INCLUDING A HEAT PUMP FOR HEATING AN EXTERNAL FLUID WITH A LARGE TEMPERATURE DIFFERENTIAL

(30) Priorité: 02.08.2012 FR 1257562
(43) Date de publication de la demande: 10.06.2015
(73) Titulaire: Electricité de France, 75008 Paris (FR)
(72) Inventeur: PEUREUX, Jean-Louis, F-89140 Villethierry (FR); BOURIG, Ali, F-78690 LES ESSARTS-LE-ROI (FR); ZOUGHAIB, Assaad, F-78120 Rambouillet (FR); BESBES, Karim, F-94000 Creteil (FR)
(74) Mandataire: Cabinet Plasseraud
(86) Numéro de dépôt international: PCT/FR2013/051701
(87) Numéro de publication internationale: WO 2014/020255

(56) Documents cités:
- WO-A1-2011/061715
- DE-A1- 10 327 953
- DE-A1-102008 047 753
- US-A1- 2007 169 367
- YU J ET AL: "A thermodynamic analysis of a transcritical cycle with refrigerant mixture R32/R290 for a small heat pump water heater", ENERGY AND BUILDINGS, LAUSANNE, CH, vol. 42, no. 12, 1 décembre 2010 (2010-12-01), pages 2431-2436, XP027394411, ISSN: 0378-7788 [extrait le 2010-09-21]

## Description

L'invention se rapporte à une utilisation d'une pompe à chaleur dans une installation de séchage industriel pour sécher une matière à sécher choisie parmi du bois et de la boue.

Dans l'industrie, les besoins de chaleur dans une gamme de températures de 60°C à 150°C correspondent, entre autres, à un chauffage d'un fluide extérieur, liquide ou gaz, avec un fort écart de températures entre une température initiale et une température cible. Les fluides sources, utilisés comme sources de chaleur auxquelles la chaleur est prélevée, sont généralement des effluents liquides ou gazeux. Selon le débit de ces effluents, l'écart de températures peut varier.

En particulier, sans que l'invention ne soit limitée à une telle application, le séchage est très répandu et couvre de nombreux domaines : papier, agro-alimentaire, traitement des eaux usées, textiles, bois, peintures, etc. Ainsi, la répartition des consommations énergétiques liées au séchage en France est la suivante : 39% pour l'industrie papier/carton, 23% pour le secteur des IAA, 13% pour la chimie, 11% pour le secteur des matériaux, 2% en métallurgie, 2% en textile et 10% pour les autres industries. Les installations de séchage sont estimées à un peu plus de 13 000 dans l'industrie en France et se déclinent en un grand nombre de technologies mises en oeuvre. Le séchage par convection est le procédé le plus répandu dans l'industrie. Ce procédé consiste à faire circuler un courant gazeux le plus chaud et le plus sec possible sur une matière à sécher. Ce courant gazeux, le plus souvent de l'air, fournit la chaleur nécessaire à l'évaporation du liquide contenu dans la matière, et entraîne la vapeur (d'eau) formée. Le gaz se refroidit et s'enrichit en humidité entre l'entrée et la sortie de l'installation de séchage, tandis que la matière progressivement asséchée se réchauffe.

Une solution pour réaliser un chauffage à fort écart de températures d'un fluide extérieur consiste à récupérer la chaleur d'un fluide source, dans le cas du séchage, de l'air humide généré par l'installation de séchage.

Pour ce faire, il est connu d'utiliser des échangeurs de chaleur, tels que des échangeurs tubulaires, des batteries ailetées avec fluide intermédiaire, des échangeurs caloduc, des échangeurs à plaques ou des échangeurs rotatifs. Les caractéristiques issues des fabricants d'échangeur indiquent une efficacité thermique comprise entre 40% et 90%. Toutefois, ce rapport ne signifie pas que l'énergie disponible dans l'effluent chaud (et humide) sera récupérée avec un rendement de cet ordre. En fait, dans le cas du séchage par exemple, un simple échangeur entre l'air humide extrait et l'air sec entrant ne permet de récupérer qu'une quantité faible des calories de l'air humide extrait pour augmenter la température de l'air sec entrant. Elle représente, pour des températures de séchage élevées, moins de 8 % de l'énergie introduite dans l'installation de séchage.

Dans le cadre de la réduction des consommations énergétiques et des émissions de CO₂, le développement des pompes à chaleur (PAC) constitue une option technologique intéressante pour réaliser le chauffage du fluide extérieur.

Une pompe à chaleur comprend classiquement un premier échangeur de chaleur, formant évaporateur, dont la sortie est connectée à l'entrée d'un deuxième échangeur de chaleur, formant condenseur, par l'intermédiaire d'une unité de compression. La sortie du condenseur est connectée à l'entrée de l'évaporateur par l'intermédiaire d'une unité de détente. Un fluide frigorigène peut alors circuler entre l'évaporateur et le condenseur pour prélever de la chaleur au fluide source au niveau de l'évaporateur, et céder de la chaleur au fluide extérieur au niveau du condenseur. Dans le cas du séchage, l'air extrait peut être refroidi à travers l'évaporateur de la pompe à chaleur (avec condensation de l'humidité), et l'air entrant réchauffé à travers le condenseur pour le restituer à la température souhaitée.

Les installations de séchage recensées en France (séchage de bois et de boues) confirment que les pompes à chaleur peuvent diminuer la consommation énergétique.

Toutefois, les pompes à chaleur classiques ne permettent d'atteindre qu'une température cible limitée à 60°C. Par ailleurs, les cycles thermodynamiques classiques mis en oeuvre dans ces pompes à chaleur ne permettent pas d'atteindre des températures de condensation très élevées sans aboutir à des performances handicapantes pour les pompes à chaleur. Les performances des pompes à chaleur actuelles sont donc limitées dans le cas du chauffage à fort écart de températures et ne permettent pas d'assurer une rentabilité économique réaliste.

Pour augmenter les performances des pompes à chaleur pour des applications à forts écarts de températures, et notamment pour la production d'eau chaude sanitaire dans les secteurs résidentiel et petit tertiaire, il est connu d'utiliser des pompes à chaleur au CO₂ en cycle transcritique. Or cette solution est efficace jusqu'à 90°C en raison des pressions associées très élevées.

Des pompes à chaleur utilisant un fluide frigorigène hydro-fluoro-carbone (HFC) en cycle transcritique sont notamment décrites dans l'article « A Thermodynamic analysis of a transcritical cycle with refrigerant mixture R32/R290 for a small heat pump water heater », Yu et al., Vol.42, No.12, p. 2431-2436, 1er décembre 2010, ainsi que dans le document DE 103 27 953. Comme pour les pompes à chaleur au CO₂ en cycle transcritique, ces pompes à chaleur sont utilisées pour des applications domestiques, tel que le chauffage d'eau, à des températures allant jusqu'à 90°C maximum. Toutefois, ces pompes à chaleur ne sont pas adaptées à des applications industrielles dans lesquelles les températures à atteindre sont très élevées, notamment supérieures à 90°C, en particulier supérieures à 100°C, de préférence supérieures à 120°C, et par exemple jusqu'à 150°C.

Il est également connu, par exemple du document DE 10 2008 047 753, d'utiliser des pompes à chaleur en cascade. Ce montage permet une augmentation globale des performances d'une part grâce à la réduction de l'écart de températures vu par chaque pompe à chaleur et d'autre part par la possibilité d'adapter le fluide frigorigène au régime de chaque pompe à chaleur. Plus le système est discrétisé plus les performances seront bonnes. Cependant, en pratique, les critères de rentabilité économique limitent le système à deux pompes à chaleur.

Une utilisation selon le préambule de la revendication 1 est, par ailleurs, décrit dans le document WO 2011/061715.

Il existe donc un besoin pour une installation pour les applications de séchage hautes températures, et plus généralement des applications de chauffage hautes températures à fort écart de températures, présentant des performances et une rentabilité économique satisfaisantes.

L'invention vise à pallier les problèmes évoqués ci-dessus.

A cet effet, l'invention propose une utilisation telle que définie dans la revendication 1.

L'utilisation d'un fluide frigorigène hydro-fluoro-carbone (HFC) ou d'un fluide frigorigène hydro-fluoro-oléfine (HFO) en cycle transcritique présente principalement deux avantages. D'une part, lors de la phase d'évaporation au niveau du premier échangeur de chaleur, le fluide frigorigène reste à température constante, ce qui est particulièrement intéressant par exemple dans le cas de récupération de chaleur de condensation. D'autre part, le passage dans le deuxième échangeur de chaleur du fluide frigorigène pouvant se faire en régime transcritique, la température évolue tout le long du deuxième échangeur de chaleur et accompagne ainsi intimement le réchauffage du fluide extérieur. Le couplage approprié entre le fluide frigorigène utilisé et l'application visée permet d'optimiser le rendement exergétique de la pompe à chaleur qui est un des facteurs déterminants pour sa rentabilité. Les performances de la pompe à chaleur s'en trouvent considérablement améliorées.

En outre, la pompe à chaleur mise en oeuvre dans l'installation selon l'invention permet de développer des puissances thermiques importantes, notamment supérieures à 100 kW, permettant, à partir d'un fluide source à moyenne température, notamment supérieure à 40°C, en particulier supérieure à 50°C et par exemple jusqu'à 70°C, d'atteindre les températures cibles élevées, notamment supérieures à 90°C, en particulier supérieures à 100°C, de préférence supérieures à 120°C, et par exemple jusqu'à 150°C. Ces puissances combinées à l'agencement particulier du système de traitement par rapport au circuit de fluide extérieur dans l'enceinte et aux premier et deuxième échangeurs de chaleur rendent l'installation particulièrement adaptée aux applications industrielles et, en particulier, au séchage industriel.

Le fluide frigorigène présente un point critique avec une température critique et une pression critique. L'unité de compression peut alors être adaptée pour comprimer le fluide frigorigène de telle manière que ledit fluide frigorigène présente, à la sortie de l'unité de compression et à l'entrée du deuxième échangeur de chaleur, simultanément une pression supercritique supérieure à la pression critique et une température supercritique supérieure à la température critique.

De plus, le deuxième échangeur de chaleur peut être un refroidisseur de gaz adapté pour réaliser un refroidissement du fluide frigorigène dans un état fluide supercritique, ledit fluide frigorigène étant, à l'entrée du refroidisseur de gaz, simultanément à une pression supercritique supérieure à la pression critique et à une température supercritique supérieure à la température critique, et le refroidissement du fluide frigorigène s'effectuant à pression supercritique constante.

Dans un mode de réalisation particulier, le fluide frigorigène peut être le fluide frigorigène hydro-fluoro-carbone R-32.

La pompe à chaleur peut être placée dans l'enceinte.

La mise en oeuvre de la pompe à chaleur définie précédemment dans une installation de séchage permet un apport d'énergie important en amont du support de séchage pour le chauffage ou la déshumidification de l'air entrant, ou pendant la phase de déshydratation de la matière. De plus, cette mise en oeuvre permet d'exploiter l'énergie contenue dans l'air humide extrait. La valorisation de cette énergie, connue sous la dénomination de la chaleur fatale, contenue dans l'air humide extrait représente donc un gisement d'économie d'énergie intéressant afin d'augmenter l'efficacité énergétique du procédé de séchage et d'en diminuer les coûts.

L'installation peut comprendre en outre une unité de stockage de chaleur adaptée pour stocker de la chaleur du fluide extérieur qui a circulé au voisinage du deuxième échangeur de chaleur.

L'installation peut également comprendre un dispositif de chauffe additionnel agencé en amont du système de traitement.

La mise en oeuvre de la pompe à chaleur définie précédemment dans une installation de séchage permet un apport d'énergie important en amont du support de séchage pour le chauffage ou la déshumidification de l'air entrant, ou pendant la phase de déshydratation de la matière. De plus, cette mise en oeuvre permet d'exploiter l'énergie contenue dans l'air humide extrait. La valorisation de cette énergie, connue sous la dénomination de la chaleur fatale, contenue dans l'air humide extrait représente donc un gisement d'économie d'énergie intéressant afin d'augmenter l'efficacité énergétique du procédé de séchage et d'en diminuer les coûts.

L'installation peut comprendre en outre une unité de stockage de chaleur adaptée pour stocker de la chaleur du fluide extérieur qui a circulé au voisinage du deuxième échangeur de chaleur.

L'installation peut également comprendre un dispositif de chauffe additionnel agencé en amont du système de traitement.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation schématique d'une pompe à chaleur selon un mode de réalisation de l'invention, la pompe à chaleur utilisant un fluide frigorigène choisi parmi un fluide frigorigène hydro-fluoro-carbone et un fluide frigorigène hydro-fluoro-oléfine en cycle transcritique pour réaliser un chauffage à fort écart de températures d'un fluide extérieur à partir d'un fluide source,
- la figure 2 est une représentation schématique d'une installation de séchage mettant en oeuvre la pompe à chaleur de la figure 1,
- la figure 3 est une représentation en perspective d'un refroidisseur de gaz cédant de la chaleur au fluide extérieur dans la pompe à chaleur de la figure 1,
- la figure 4 est une représentation en perspective d'un évaporateur prélevant de la chaleur au fluide source dans la pompe à chaleur de la figure 1,
- les figures 5a et 5b sont des diagrammes température-entropie illustrant respectivement le cycle thermodynamique transcritique du fluide frigorigène hydro-fluoro-carbone R-32 dans la pompe à chaleur de la figure 1, et le cycle thermodynamique subcritique du fluide frigorigène hydro-fluoro-carbone R-245fa dans une pompe à chaleur classique.

Sur les figures, les mêmes références désignent des éléments identiques ou analogues.

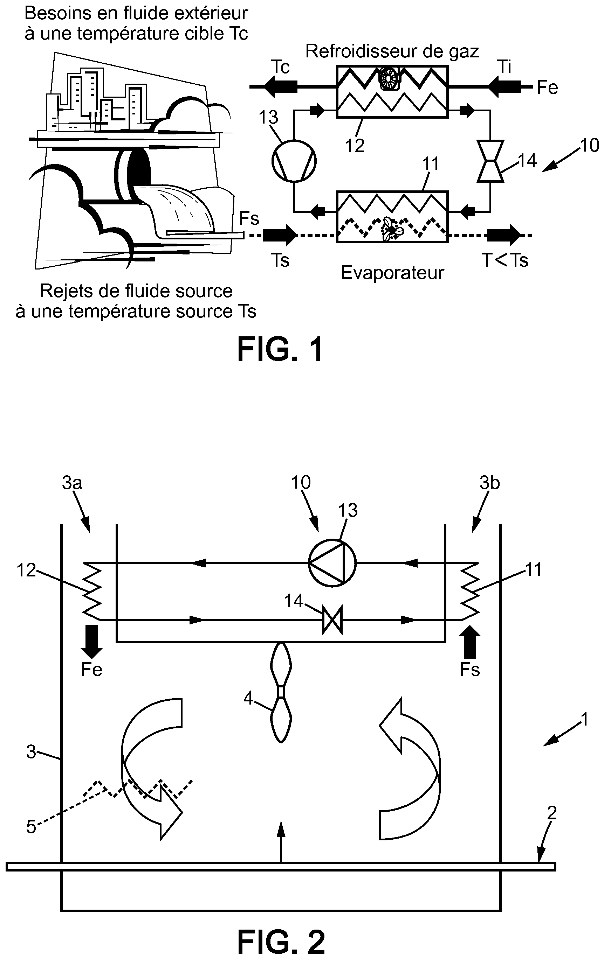

La figure 1 représente une pompe à chaleur 10 pour réaliser un chauffage à fort écart de températures d'un fluide extérieur Fe à partir d'un fluide source Fs. Sans y être limitée, la pompe à chaleur 10 de la figure 1 est utilisée dans une application au chauffage d'un air sec comme fluide extérieur Fe d'une température initiale Ti, par exemple de 60°C, à une température cible Tc, par exemple de 120°C, à partir d'un air humide comme fluide source Fs à une température source Ts, par exemple de 50°C.

En fonction de l'application considérée, le fluide extérieur pourrait être tout fluide autre que de l'air sec et le fluide source pourrait être tout fluide autre que de l'air humide. En outre, l'écart entre la température initiale et la température cible du fluide extérieur pourrait être différent de l'écart précité, et pourrait notamment être tout écart constituant un fort écart de températures, c'est-à-dire un écart de températures supérieur à 20°C, de préférence supérieur à 30°C, notamment supérieur à 40°C, en particulier supérieur à 60°C, et permettant d'atteindre une température cible Tc élevée, supérieure à 90°C, en particulier supérieures à 100°C, de préférence supérieures à 120°C, et par exemple jusqu'à 150°C, à partir d'une température source, notamment supérieure à 40°C, en particulier supérieure à 50°C et par exemple jusqu'à 70°C.

La pompe à chaleur 10 comprend un premier échangeur de chaleur 11 au travers duquel l'air humide comme fluide source Fs peut circuler, et un deuxième échangeur de chaleur 12 au travers duquel l'air sec comme fluide extérieur Fe peut circuler. Les premier 11 et deuxième 12 échangeurs de chaleur sont reliés l'un à l'autre par un circuit de fluide frigorigène comprenant :
- une unité de compression 13 dont une entrée est connectée à une sortie du premier échangeur de chaleur 11 et une sortie est connectée à l'entrée du deuxième échangeur de chaleur 12, et
- une unité de détente 14 dont une entrée est connectée à une sortie du deuxième échangeur de chaleur 12 et une sortie est connectée à l'entrée du premier échangeur de chaleur 11.

Un fluide frigorigène peut ainsi circuler dans le circuit de fluide frigorigène, entre le premier échangeur de chaleur 11 et le deuxième échangeur de chaleur 12. Le premier échangeur de chaleur 11 forme un évaporateur dans lequel le fluide frigorigène prélève de la chaleur à l'air humide à la température source Ts, et le deuxième échangeur de chaleur 12 forme un condenseur ou refroidisseur de gaz dans lequel le fluide frigorigène cède de la chaleur à l'air sec pour le faire passer de la température initiale Ti à la température cible Tc.

Selon l'invention, le fluide frigorigène est un fluide frigorigène hydro-fluoro-carbone. En particulier, le fluide frigorigène hydro-fluoro-carbone choisi est le difluorométhane (R-32).

En variante, le fluide frigorigène peut être un fluide frigorigène choisi parmi les hydro-fluoro-oléfine.

Le fluide frigorigène présente un point critique avec une température critique et une pression critique. Pour assurer un chauffage à fort écart de températures, l'unité de compression 13 est adaptée pour comprimer le fluide frigorigène de telle manière qu'il présente, à la sortie de l'unité de compression 13 et à l'entrée du refroidisseur de gaz 12, simultanément une pression supercritique supérieure à la pression critique et une température supercritique supérieure à la température critique.

De plus, le refroidisseur de gaz 12 est adapté pour réaliser un refroidissement du fluide frigorigène dans un état fluide supercritique. Le fluide frigorigène est alors, à l'entrée du refroidisseur de gaz 12, simultanément à une pression supercritique supérieure à la pression critique et à une température supercritique supérieure à la température critique, et le refroidissement du fluide frigorigène se fait à pression supercritique constante. Le refroidisseur de gaz 12 est dimensionné en fonction des propriétés du fluide frigorigène dans son état fluide supercritique pour atteindre la température souhaitée sur le fluide extérieur. La géométrie du refroidisseur de gaz 12 est déterminée (typologie, surface d'échange, forme, nombre de passes, etc.) pour maintenir un écart minimum fixé entre l'évolution des températures du fluide frigorigène et du fluide extérieur à chauffer. Cet écart de températures est fixé en fonction de critères économiques.

De cette manière, comme il apparaîtra de la suite de la description, le fluide frigorigène peut circuler dans la pompe à chaleur 10 en cycle transcritique.

Comme représenté sur la figure 2, la pompe à chaleur 10 décrite ci-dessus peut être mise en oeuvre dans une installation 1 comprenant notamment un système de traitement 2 en amont duquel le refroidisseur de gaz 12 est agencé, et un circuit de fluide extérieur adapté pour faire circuler le fluide extérieur Fe successivement au voisinage du refroidisseur de gaz 12 et au voisinage du système de traitement 2.

Le système de traitement 2 est généralement un système réalisant un traitement avec la chaleur que le fluide extérieur Fe a prélevé au passage du refroidisseur de gaz 12. Le fluide extérieur Fe cède ainsi de la chaleur au passage du système de traitement 2 avec un fort écart de températures entre le fluide extérieur en amont du système de traitement 2 et le fluide extérieur en aval du système de traitement 2.

Dans l'application particulière représentée sur la figure 2, la pompe à chaleur 10 est mise en oeuvre dans une installation de séchage 1. Le séchage à haute température présente de nombreux avantages (augmentation de la vitesse de séchage, temps de séjour réduit du produit, réduction de la taille des sécheurs, des pertes thermiques, réduction de l'investissement, etc.) pour les produits non thermosensibles. Pour sécher de la matière, le procédé le plus courant consiste à souffler de l'air chaud et sec dans une enceinte 3. Cet air, chaud et chargé d'humidité, est ensuite évacué à l'extérieur de l'enceinte 3. Le procédé de séchage exige un grand apport d'énergie, en amont pour le chauffage ou la déshumidification de l'air sec entrant, ou pendant la phase de déshydratation du produit. Par ailleurs, les pertes thermiques liées aux opérations de séchage dans l'industrie représentent environ 40 TWh. L'enjeu énergétique de la récupération des calories sur l'air humide extrait des sécheurs est donc très important.

Comme représenté sur la figure 2, l'installation de séchage 1 comprend donc l'enceinte 3 dans laquelle le système de traitement 2, se présentant sous la forme d'un support de séchage destiné à recevoir la matière à sécher, est disposé. L'enceinte 3 présente une entrée 3a et une sortie 3b agencées respectivement en amont et en aval du support de séchage 2.

La pompe à chaleur 10 est placée dans l'enceinte 3 avec l'évaporateur 11 et le refroidisseur de gaz 12 agencés au voisinage respectivement de la sortie 3b et de l'entrée 3a de l'enceinte 3. Sur la figure 2, l'entrée 3a et la sortie 3b de l'enceinte 3 comprennent chacune un conduit dans lequel l'échangeur de chaleur correspondant est placé. En variante, la pompe à chaleur 10 pourrait être placée à l'extérieur de l'enceinte 3.

Un circuit de fluide extérieur 4 comprenant, notamment un ventilateur, est alors prévu pour faire circuler l'air sec entrant, comme fluide extérieur Fe, depuis l'entrée 3a de l'enceinte 3, en amont du support de séchage 2, vers le support de séchage 2 au travers du refroidisseur de gaz 12, le cas échéant via un dispositif de chauffe additionnel, tel qu'une résistance électrique 5. Le circuit de fluide extérieur peut ensuite faire circuler l'air humide extrait ayant traversé la matière à sécher, comme fluide source Fs, en aval du support de séchage 2, vers l'évaporateur 11. L'évaporateur 11 récupère la chaleur de l'air humide extrait Fs et le refroidisseur de gaz 12 chauffe l'air sec entrant Fe.

La mise en oeuvre de la pompe à chaleur 10 utilisant un fluide frigorigène hydro-fluorocarbone (HFC) ou un fluide frigorigène hydro-fluoro-oléfine (HFO) en cycle transcritique permet de récupérer la plus grande partie de l'énergie perdue, en refroidissant l'air humide extrait Fs à un niveau de température suffisamment bas pour condenser une partie significative de l'eau contenue dans l'air, puis en remontant le niveau de température des calories à l'aide de la pompe à chaleur 10 pour pouvoir transférer ces calories dans l'enceinte 3.

L'utilisation d'un fluide frigorigène hydro-fluorocarbone (HFC) ou un fluide frigorigène hydro-fluoro-oléfine (HFO) en cycle transcritique approprié aux régimes de températures imposés par les applications de chauffage à fort écart de température permet d'augmenter de manière significative les performances de la pompe à chaleur 10. Ce cycle thermodynamique est le facteur prépondérant contribuant à l'efficacité globale de l'installation de séchage 1 à pompe à chaleur.

Un dimensionnement particulier de la pompe à chaleur 10 décrite précédemment fonctionnant au fluide frigorigène HFC R-32 en cycle transcritique est donné à titre d'exemple illustratif non limitatif dans une mise en oeuvre en récupération de calories sur un air humide saturé à 50°C pour chauffer de l'air sec de 60°C à 120°C. Une telle mise en oeuvre correspond à l'application de séchage décrite précédemment.

### Refroidisseur de gaz 12

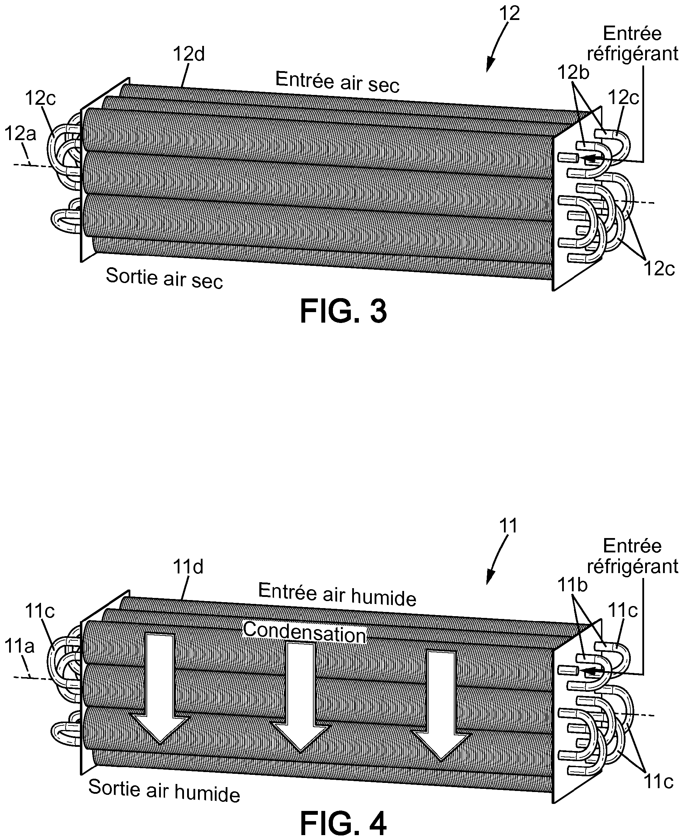

Une géométrie du refroidisseur de gaz est proposée sur la figure 3.

Une modélisation par passes du refroidisseur de gaz 12 de type tubes à ailettes rondes permet de proposer cette géométrie pour la mise en oeuvre considérée. Le refroidisseur de gaz 12 s'étend selon un axe longitudinal 12a. Il présente un serpentin composé de tubes 12b axiaux dont des extrémités sont reliées par des coudes 12c. Sur chacun des tubes 12b, des ailettes 12d s'étendent perpendiculairement.

Une puissance échangée de l'ordre de 40 kW thermique est considérée dans cet exemple. Dans le refroidisseur de gaz 12, la pression est maintenue à 80 bars et la circulation du fluide frigorigène y est à contre-courant par rapport à celle de l'air.

La géométrie est résumée dans le tableau 1 ci-dessous.

**Tableau 1**

| **Géométrie du tube** | | **Géométrie des ailettes** | |
|---|---|---|---|
| Diamètre interne | 1.8 cm | Type d'ailettes | rondes |
| Épaisseur du tube | 1 mm | Diamètre des ailettes | 10 cm |
| Longueur du tube | 3 m | Épaisseur des ailettes | 1 mm |
| Nombre de passages par rangée | 3 | Pas d'ailettes | 6 mm |
| Nombre de rangées | 5 | Nombre d'ailettes par passes | 500 |
| Nombre de passes | 15 | | |
| Longueur totale de tube | 45 m | | |

### Unité de compression 13

L'unité de compression 13 comprend, dans le cas particulier de l'utilisation du R-32 comme fluide frigorigène, les technologies actuelles de compresseur haute pression, comme par exemple le compresseur GEA Bock HAX2 CO2 T (Compresseur à pistons bicylindre semi-hermétique).

D'autres technologies de compresseur haute pression peuvent être utilisées. Par exemple, le compresseur à vis ouvert de GEA Grassot, adaptés aux plus fortes puissances.

### Évaporateur 11

Une géométrie de l'évaporateur 11 est proposée sur la figure 4.

Une modélisation par passes de l'évaporateur 11 de type tubes à ailettes rondes permet de proposer cette géométrie pour la mise en oeuvre considérée. L'évaporateur 11 présente une géométrie analogue à celle du refroidisseur de gaz 12. En particulier, l'évaporateur 11 s'étend selon un axe longitudinal 11a et présente un serpentin composé de tubes 11b axiaux dont des extrémités sont reliées par des coudes 11c. Sur chacun des tubes 11b, des ailettes 11d s'étendent perpendiculairement.

Pour cet évaporateur 11, la puissance échangée est de 35 kW thermique. La circulation se fait à contre-courant et la pression est à 25 bars.

La géométrie est résumée dans le tableau 2 ci-dessous.

**Tableau 2**

| **Géométrie du tube** | | **Géométrie des ailettes** | |
|---|---|---|---|
| Diamètre interne | 1.8 cm | Type d'ailettes | rondes |
| Épaisseur du tube | 1 mm | Diamètre des ailettes | 10 cm |
| Longueur du tube | 2 m | Épaisseur des ailettes | 1 mm |
| Nombre de passages par rangée | 5 | Pas d'ailettes | 3 mm |
| Nombre de rangées | 4 | | |
| Nombre de passes | 20 | | |
| Longueur totale de tube | 40 m | | |

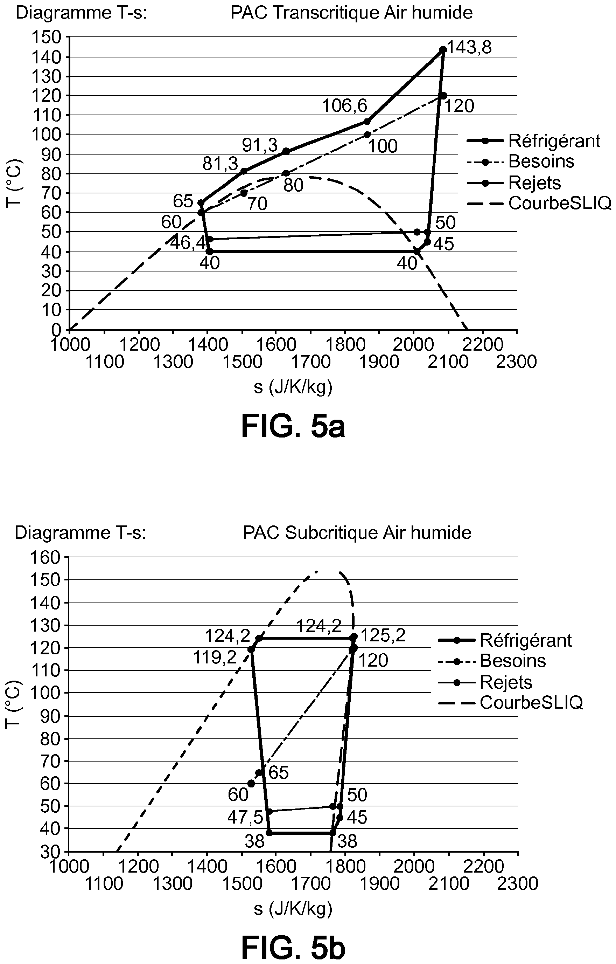

Le cycle thermodynamique transcritique du fluide frigorigène R-32 dans la pompe à chaleur 10 avec le refroidisseur de gaz 12, l'unité de compression 13 et l'évaporateur 11 est présenté sur la figure 5a sous la forme d'un diagramme température-entropie. Ce diagramme permet de visualiser les plages de valeurs des pressions et des températures atteintes au refoulement de l'unité de compression 13 et à l'entrée du refroidisseur de gaz 12. Il ressort, en particulier, que les valeurs atteintes sont situées au dessus de la courbe de saturation.

Les performances et puissances mises en jeu sont résumées dans le tableau 3 ci-dessous.

**Tableau 3**

| | |
|---|---|
| Q_{condenseur} [W] | 45118 |
| Q_{compresseur} [W] | 10412 |
| Qₑᵥₐₚₒᵣₐₜₑᵤᵣ [W] | 33788 |
| Qᵥₑₙₜᵢₗₐₜₑᵤᵣ [W] | 118.35 |
| Qᵥₑₙₜᵢₗ/Q_{comp} | 1,1 % |

Dans le tableau 4 ci-dessous, les performances thermodynamiques de la PAC sont calculées pour le cycle utilisant le HFC R-32 en transcritique et comparées à un cycle subcritique avec du HFC R-245fa, représenté sur la figure 5b, dans une mise en oeuvre analogue de chauffage d'un air sec de 60°C à 120°C à partir d'un air saturé en humidité à une température de 50°C et à un débit de 1kg/s.

**Tableau 4**

| | Débit rejet (kg/s) | Débit besoins (kg/s) | COP réel | COP Carnot | Efficacité exergétique (%) |
|---|---|---|---|---|---|
| Cycle subcritique du HFC-245fa | 1 | 1 | 2,18 | 4,98 | 44 |
| Cycle transcritique du HFC R-32 | 1 | 1 | 4,06 | 6,27 | 65 |

Ainsi, pour une pompe à chaleur en récupération de calories sur un air humide saturé à 50°C pour chauffer de l'air sec de 60 à 120°C (i.e application séchage industriel), l'utilisation du difluorométhane (R-32) en cycle transcritique fait passer le COP d'environ 2 à plus de 4. L'utilisation du fluide frigorigène HFC R-32 en regime transcritique approprié aux régimes de températures imposés par l'application de séchage permet de diminuer la consommation énergétique par un facteur de 2 par rapport à un cycle thermodynamique classique utilisant un corps pur en subcritique (e.g. HFC-R245fa).

Selon l'application considérée, l'installation peut comprendre un circuit de fluide source distinct du circuit de fluide extérieur et adapté pour faire circuler de l'air successivement au voisinage de l'évaporateur 11 et au voisinage du système de traitement. En outre, lorsqu'il existe un besoin discontinu en chaleur, l'installation peut comprendre une unité de stockage de chaleur adapté pour stocker de la chaleur du fluide extérieur qui a circulé au voisinage du refroidisseur de gaz 12.

## Revendications

1. Utilisation d'une pompe à chaleur (10) dans une installation (1) de séchage industriel pour sécher une matière à sécher choisie parmi du bois et de la boue,
ladite pompe à chaleur (10) comprenant :
- des premier (11) et deuxième (12) échangeurs de chaleur adaptés pour échanger de la chaleur respectivement avec un fluide source (Fs) situé au voisinage du premier échangeur de chaleur (11) et un fluide extérieur (Fe) situé au voisinage du deuxième échangeur de chaleur (12), chacun desdits premier (11) et deuxième (12) échangeurs de chaleur présentant une entrée et une sortie,
- un fluide frigorigène choisi parmi un fluide frigorigène hydro-fluoro-carbone et un fluide frigorigène hydro-fluoro-oléfine,
- un circuit de fluide frigorigène adapté pour faire circuler le fluide frigorigène entre les premier (11) et deuxième (12) échangeurs de chaleur, ledit circuit de fluide frigorigène comprenant une unité de compression (13) ayant une entrée connectée à la sortie du premier échangeur de chaleur (11) et une sortie connectée à l'entrée du deuxième échangeur de chaleur (12), et une unité de détente (14) ayant une entrée connectée à la sortie du deuxième échangeur de chaleur (12) et une sortie connectée à l'entrée du premier échangeur de chaleur (11),
ladite installation (1) comprenant :
- une enceinte (3) présentant une entrée (3a) et une sortie (3b),
- un système de traitement (2) disposé dans l'enceinte (3), le système de traitement étant un support de séchage (2) destiné à recevoir la matière à sécher,
- un circuit de fluide extérieur (4) adapté pour faire circuler de l'air comme fluide extérieur successivement au voisinage du deuxième échangeur de chaleur (12) et au voisinage du support de séchage (2), le circuit de fluide extérieur (4) étant en outre adapté pour faire circuler de l'air comme fluide extérieur en aval du support de séchage (2), comme fluide source, au voisinage du premier échangeur de chaleur (11),
l'utilisation prévoyant de :
- disposer la matière sur le support de séchage (2),
- faire circuler de l'air comme fluide source et fluide extérieur (Fe) entre l'entrée (3a) et la sortie (3b) de l'enceinte (3), l'air circulant successivement au voisinage du deuxième échangeur de chaleur (12), au voisinage du support de séchage (2) et au voisinage du premier échangeur de chaleur (11),
- faire circuler le fluide frigorigène,
l'utilisation étant **caractérisée en ce que** l'entrée (3a) et la sortie (3b) de l'enceinte (3) sont agencées respectivement en amont et en aval du système de traitement (2) et les premier (11) et deuxième (12) échangeurs de chaleur sont agencés au voisinage respectivement de la sortie (3b) et de l'entrée (3a) de l'enceinte (3), et
**en ce que** le deuxième échangeur de chaleur (12) et le circuit de fluide frigorigène fait circuler le fluide frigorigène en cycle transcritique, de telle manière que l'air est chauffé avec un fort écart de températures supérieur à 40°C, en particulier supérieur à 60°C, et a une température cible Tc élevée, supérieure à 120°C, en amont du support de séchage (2), l'air comme fluide extérieur (Fe) cédant de la chaleur au passage du support de séchage (2) avec un fort écart de température entre l'air comme fluide extérieur en amont du support de séchage (2) et l'air comme fluide extérieur en aval du support de séchage (2).

2. Utilisation selon la revendication 1, dans laquelle le fluide frigorigène présente un point critique avec une température critique et une pression critique, et prévoyant de comprimer le fluide frigorigène de telle manière que ledit fluide frigorigène présente, à la sortie de l'unité de compression (13) et à l'entrée du deuxième échangeur de chaleur (12), simultanément une pression supercritique supérieure à la pression critique et une température supercritique supérieure à la température critique.

3. Utilisation selon la revendication 2, dans laquelle le deuxième échangeur de chaleur est un refroidisseur de gaz (12) adapté pour réaliser un refroidissement du fluide frigorigène dans un état fluide supercritique, ledit fluide frigorigène étant, à l'entrée du refroidisseur de gaz (12), simultanément à une pression supercritique supérieure à la pression critique et à une température supercritique supérieure à la température critique, et le refroidissement du fluide frigorigène s'effectuant à pression supercritique constante.

4. Utilisation selon l'une quelconque des revendications 1 à 3, dans lequel fluide frigorigène est le fluide frigorigène hydro-fluoro-carbone R-32.

5. Utilisation selon l'une quelconque des revendications 1 à 4, prévoyant en outre de stocker de la chaleur du fluide extérieur (Fe) qui a circulé au voisinage du deuxième échangeur de chaleur (12) dans une unité de stockage de chaleur.

6. Utilisation selon l'une quelconque des revendications 1 à 5, dans lequel l'installation comprend en outre un dispositif de chauffe additionnel (5) agencé en amont du système de traitement (2).

## Patentansprüche

1. Verwendung einer Wärmepumpe (10) in einer industriellen Trocknungsvorrichtung (1), um ein zu trocknendes Material, ausgewählt aus Holz und Schlamm, zu trocknen,
wobei die Wärmepumpe (10) aufweist:
- einen ersten (11) und zweiten (12) Wärmetauscher, die eingerichtet sind, Wärme mit einem in der Umgebung des ersten Wärmetauschers (11) befindlichen Quellenfluid (Fs) bzw. einem in der Umgebung des zweiten Wärmetauschers (12) befindlichen externen Fluid (Fe) zu tauschen, wobei der erste (11) und zweite (12) Wärmetauscher jeweils einen Eingang und einen Ausgang aufweisen,
- ein Kältemittelfluid, ausgewählt aus einem Hydrogen-Fluor-Kohlenstoff-Kältemittelfluid und einem Hydrogen-Fluor-Olefin-Kältemittelfluid,
- einen Kältemittelfluid-Kreislauf, der eingerichtet ist, das Kältemittelfluid zwischen dem ersten (11) und zweiten (12) Wärmetauscher zirkulieren zu lassen, wobei der Kältemittelfluid-Kreislauf eine Kompressionseinheit (13) mit einem an dem Ausgang des ersten Wärmetauschers (11) angeschlossenen Eingang und mit einem an dem Eingang des zweiten Wärmetauschers (12) angeschlossenen Ausgang und eine Expansionseinheit (14) mit einem an dem Ausgang des zweiten Wärmetauschers (12) angeschlossenen Eingang und mit einem an dem Eingang des ersten Wärmetauschers (11) angeschlossenen Ausgang aufweist,
wobei die Vorrichtung (1) aufweist:
- eine Umwandung (3) mit einem Eingang (3a) und einem Ausgang (3b),
- ein in der Umwandung (3) angeordnetes Behandlungssystem (2), wobei das Behandlungssystem ein Trocknungsträger (2) ist, der dazu dient, das zu trocknende Material aufzunehmen,
- einen externen Fluidkreislauf (4), der eingerichtet ist, Luft als externes Fluid sukzessiv in der Umgebung des zweiten Wärmtauschers (12) und in der Umgebung des Trocknungsträgers (2) zirkulieren zu lassen, wobei der externe Fluidkreislauf (4) ferner eingerichtet ist, Luft als externes Fluid stromabwärts des Trocknungsträgers (2) und als Quellenfluid in der Umgebung des ersten Wärmetauschers (11) zirkulieren zu lassen,
wobei die Verwendung vorsieht:
- Anordnen des Materials auf dem Trocknungsträger (2),
- Zirkulieren lassen von Luft als Quellenfluid und externes Fluid (Fe) zwischen dem Eingang (3a) und dem Ausgang (3b) der Umwandung (3), wobei die Luft sukzessiv in der Umgebung des zweiten Wärmetauschers (12), in der Umgebung des Trocknungsträgers (2) und in der Umgebung des ersten Wärmetauschers (11) zirkuliert,
- Zirkulieren lassen des Kältemittelfluids,
wobei die Verwendung **dadurch gekennzeichnet ist, dass** der Eingang (3b) und der Ausgang (3b) der Umwandung (3) stromaufwärts bzw. stromabwärts des Behandlungssystems (2) angeordnet sind und der erste (11) und zweite (12) Wärmetauscher in der Umgebung des Ausgangs (3b) bzw. des Eingangs (3a) der Umwandung (3) angeordnet sind, und
dadurch, dass der zweite Wärmetauscher (12) und der Kältemittelkreislauf das Kälte - mittelfluid im transkritischen Zyklus zirkulieren lassen, derart, dass die Luft mit einer großen Temperaturdifferenz von mehr als 40°C, insbesondere mehr als 60°C, aufgeheizt wird und stromaufwärts des Trocknungsträgers (2) eine erhöhte Zieltemperatur Tc von mehr als 120°C hat, wobei die Luft als externes Fluid (Fe) beim Vorbeiströmen an dem Trocknungsträger (2) Wärme abgibt, mit einer großen Temperaturdifferenz zwischen der Luft als externes Fluid stromaufwärts des Trocknungsträgers (2) und der Luft als externes Fluid stromabwärts des Trocknungsträgers (2).

2. Verwendung nach Anspruch 1, in welcher das Kältemittelfluid einen kritischen Punkt mit einer kritischen Temperatur und einem kritischen Druck hat, und wobei vorgesehen ist, das Kältemittelfluid zu komprimieren, derart, dass das Kältemittelfluid am Ausgang der Kompressionseinheit (13) und am Eingang des zweiten Wärmetauschers (2) gleichzeitig einen superkritischen Druck oberhalb des kritischen Drucks und eine superkritische Temperatur oberhalb der kritischen Temperatur hat.

3. Verwendung nach Anspruch 2, in welcher der zweite Wärmetauscher ein Gaskühler (12) ist, der eingerichtet ist, eine Kühlung des Kältemittelfluids in einem superkritischen Fluidzustand zu verwirklichen, wobei das Kältemittelfluid am Eingang des Gaskühlers (12) gleichzeitig einen superkritischen Druck oberhalb des kritischen Drucks und eine superkritische Temperatur oberhalb der kritischen Temperatur hat, und die Kühlung des Kältemittelfluids sich bei einem konstanten superkritischen Druck vollzieht.

4. Verwendung nach einem der Ansprüche 1 bis 3, in welcher das Kältemittelfluid das Hydrogen-Fluor-Kohlenstoff-Kältemittelfluid R-32 ist.

5. Verwendung nach einem der Ansprüche 1 bis 4, ferner aufweisend Speichern der Wärme des externen Fluids (Fe), das in der Umgebung des zweiten Wärmetauschers (12) zirkuliert ist, in einer Wärmespeichereinheit.

6. Verwendung nach einem der Ansprüche 1 bis 5, in welcher die Vorrichtung ferner eine zusätzliche Heizvorrichtung (5) aufweist, die stromaufwärts des Behandlungssystems (2) angeordnet ist.

## Claims

1. Use of a heat pump (10) in an industrial drying installation (1) for drying a material chosen among wood and sludge,
said heat pump (10) comprising:
- first (11) and second (12) heat exchangers adapted to exchange heat respectively with the source fluid (Fs) located in the vicinity of the first heat exchanger (11) and the external fluid (Fe) located in the vicinity of the second heat exchanger (12), each of said first (11) and second (12) heat exchangers having an inlet and an outlet,
- a coolant selected from among a hydrofluorocarbon coolant and a hydrofluoroolefin coolant,
- a coolant circuit suitable for circulating the coolant between the first (11) and second (12) heat exchangers, said coolant circuit comprising a compression unit (13) having an inlet connected to the outlet of the first heat exchanger (11) and an outlet connected to the inlet of the second heat exchanger (12), and an expansion unit (14) having an inlet connected to the outlet of the second heat exchanger (12) and an outlet connected to the inlet of the first heat exchanger (11),
said installation (1) comprising:
- a chamber (3) having an inlet (3a) and an outlet (3b),
- a treatment system (2) located in the chamber (3), the treatment system is a drying rack (2) intended to receive a material to be dried,
- a circuit (4) of external fluid, suitable for circulating air as the external fluid (Fe) successively in the vicinity of the second heat exchanger (12) and in the vicinity of the treatment system (2), said external fluid circuit (4) being further adapted to circulate air as the external fluid downstream of the treatment system (2), as the source fluid, in the vicinity of the first heat exchanger (11),
the use comprising:
- arranging the material on the drying rack (2),
- circulating air as the source fluid and the external fluid (Fe) between the inlet (3a) and the outlet (3b) of the chamber (3), air circulating successively in the vicinity of the second heat exchanger (12), in the vicinity of the drying rack (2) and in the vicinity of the first heat exchanger (11),
- circulating the coolant,
the use being **characterized in that** the inlet (3a) and the outlet (3b) of the chamber (3) are respectively arranged upstream and downstream of the treatment system (2) and the first (11) and second (12) heat exchangers are respectively arranged in the vicinity of the outlet (3b) and of the inlet (3a) of the chamber (3), and
**in that** the second heat exchanger (12) and the coolant circuit of the heat pump (10) circulate the coolant in a transcritical cycle so that air is heated with a temperature differential greater than 40°C, in particular greater than 60°C, and to a high target temperature Tc, greater than 120°C, upstream of the drying rack (2), air as external fluid (Fe) transferring heat as it passes the drying rack (2), with a large temperature differential between air as the external fluid upstream of the drying rack (2) and air as the external fluid downstream of the drying rack (2).

2. Use according to claim 1, wherein the coolant has a critical point with a critical temperature and a critical pressure, and including compressing the coolant so that said coolant simultaneously presents, at the outlet of the compression unit (13) and the inlet of the second heat exchanger (12), a supercritical pressure greater than the critical pressure and a supercritical temperature greater than the critical temperature.

3. Use according to claim 2, wherein the second heat exchanger is a gas cooler (12) adapted to cool the coolant in a supercritical fluid state, said coolant being, at the inlet of the second heat exchanger (12), simultaneously at a supercritical pressure greater than the critical pressure and at a supercritical temperature greater than the critical temperature, and the cooling of the coolant taking place at constant supercritical pressure.

4. Use according to any one of claims 1 to 3, wherein the coolant is the hydrofluorocarbon coolant R-32.

5. Use according to any one of claims 1 to 4, further providing storing heat from the external fluid (Fe) which has circulated in the vicinity of the second heat exchanger (12) in a heat storage unit.

6. Use according to any one of claims 1 to 5, wherein the installation further comprises an additional heating device (5) arranged upstream of the treatment system (2).
